(19) Europäisches Patentamt
European Patent Office
Office européen des brevets

(11) **EP 1 748 890 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(21) Anmeldenummer: 05748362.0

(22) Anmeldetag: **17.05.2005**

(51) Int Cl.:
**B32B 27/28** (2006.01)    **C08L 33/12** (2006.01)

(86) Internationale Anmeldenummer:
**PCT/EP2005/005381**

(87) Internationale Veröffentlichungsnummer:
**WO 2005/110745 (24.11.2005 Gazette 2005/47)**

(54) **POLYMERMISCHUNG AUS SCHLAGZÄHMODIFIZIERTEM POLY(METH)ACRYLAT UND FLUORPOLYMER**

POLYMER MIXTURE CONSISTING OF AN IMPACT-RESISTANCE MODIFIED POLY(METH) ACRYLATE AND A FLUOROPOLYMER

MELANGE POLYMERE CONSTITUE D'UN POLY(METH)ACRYLATE A RESISTANCE AUX CHOCS MODIFIEE ET D'UN FLUOROPOLYMERE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.05.2004 DE 102004024429**

(43) Veröffentlichungstag der Anmeldung:
**07.02.2007 Patentblatt 2007/06**

(73) Patentinhaber: **Evonik Röhm GmbH**
**64293 Darmstadt (DE)**

(72) Erfinder:
• **ARNDT, Thomas**
**64750 Lützelbach (DE)**
• **NUMRICH, Uwe**
**64846 Gross-Zimmern (DE)**
• **DEUSCH, Norbert**
**64380 Gundernhausen (DE)**
• **KROHMER, Christoph**
**64589 Stockstadt/Rhein (DE)**

(56) Entgegenhaltungen:
**DE-A1- 10 236 045**        **US-A1- 2004 086 721**

EP 1 748 890 B1

## Beschreibung

Die Erfindung betrifft eine Polymermischung aus einem schlagzähmodifizierten Poly(meth)acrylat-Kunststoff und einem Fluor-Polymeren. Die Erfindung betrifft weiterhin eine aus der Polymermischung hergestellte Folie, ein Verfahren zur ihrer Herstellung und die Verwendung als Oberflächenschutzfolie.

## Stand der Technik

EP 0 476 942 beschreibt eine Polymermischung aus einem schlagzähmodifizierten Poly(meth)acrylat-Kunststoff und einem Fluor-Polymeren, wobei dessen Anteil in der Mischung 3 bis 12 Gew.-% betragen kann. Aus den Polymermischungen können Oberflächenschutzfolien für Polyvinylchlorid- oder Acrylnitril-Butadien-Stryrol (ABS)-Kunststoffteile hergestellt werden. Dadurch kann deren Bewitterungsbeständigkeit verbessert werden.

JP-OS 03 124754 A2 beschreibt Folien, die aus Polymermischungen aus schlagzähmodifizierten Poly(meth)acrylat und Fluor-Polymeren hergestellt werden, wobei der Anteil der Fluorpolymere 5 bis 25 Gew.-% betragen kann.

WO 00/37237 beschreibt ein Verfahren zur Herstellung von Folien, die in mindestens einer Schicht Fluor-Polymere und Poly(meth)acrylate enthalten. Zur Extrusion wird eine Mischung eingesetzt, die 10 bis 90 Gew.-% PVDF und 90 bis 10 Gew.-% Polymethylmethacrylat, bezogen auf das Gewicht der Gesamtmischung, enthält.

DE 102 36 045 A1 beschreibt ein Extrusionsverfahren zur Herstellung von niedrig orientierten thermoplastischen Folien mit einem Dickenbereich von 20 bis 1.000 $\mu$m. Als geeignete Materialien für die Folien werden unter anderem auch Polymermischungen aus einem schlagzähmodifizierten Poly(meth)acrylat-Kunststoff und einem Fluor-Polymeren aufgeführt, wobei deren Mischungsverhältnis 10 : 90 bis 90 : 10 betragen kann. Es werden eine Vielzahl von Verwendungsmöglichkeiten für die Folien genannt, so z. B. die Verwendung als Dekorfolien, UV-Schutzfolien, Trockenlackfolien, Verkratzschutzfolien für optische Datenträger, sowie Datenträgermaterialien, welche mittels kontinuierlichen Bedruckverfahren wie Tiefdruck, Flexodruck, Offset-Druck, Digitaldruck, Rollensiebdruck, Transferdruckverfahren bedruckt werden und/oder in kontinuierlichen Laminier- und Kaschierverfahren, wie Foliencolamination, Kaschierung von thermoplastischen Platten- und Profilwerkstoffen, Ummantelungstechniken, Coil-Coating-Verfahren und/oder kontinuierlichen Beschichtungsverfahren, wie wasserspreitende Beschichtung, antibakterielle Beschichtung, selbstreinigende Beschichtung, Antigraffiti-Beschichtung, Kratzfestbeschichtung, elektrisch leitfähige Beschichtung, optional verbunden mit Prägeverfahren, verarbeitet werden. Als Richtwert für die Dicke von Laminatfolien werden 100 $\mu$m angegeben.

EP 1 093 911 A2 beschreibt schlägzähe, mehrschichtige Schutzfilme aus einer exponierten Schicht mit einer Mischung aus einem Fluorpolymeren und einem Acrylpolymeren und einer darunter liegenden Schicht, die z. B. aus schlagzähmodifizierten Poly(meth)acrylat bestehen kann.

EP 0 306 385 A1 beschreibt schlagzähe Polymermischungen. Diese können aus aus einem schlagzähmodifizierten Poly(meth)acrylat-Kunststoff und einem Fluor-Polymeren bestehen. Der Anteil des Fluorpolymeren liegt unter 30 Gew.-%. Für die Elastomerteilchen wird ein weiter Größenbereich von 40 bis 500 nm angegeben.

JP 59127754 A2 und JP 59127755 A2 beschreiben witterungsbeständige Schutzfolien für PVC-Stahl-Komposite. Die Schutzfolien bestehen aus Fluorpolymeren, die einen Acrylat-Elastomeranteil, jedoch keine (Meth)acrylatmatrix aufweisen.

## Aufgabe und Lösung

Einzeln stehende Folien und Verbundfolien des Standes der Technik, insbesondere solche, die aus Fluorpolymeren in Mischung mit schlagzähmodifizierten Poly(meth)acrylaten bestehen, weisen hervorragende Eigenschaften auf. Insbesondere zu nennen sind hohe Witterungsbeständigkeit, gute Chemikalienbeständigkeit, hohe Beständigkeit gegen Spannungsrisskorrosion und gute mechanische Zähigkeit. Sie sind deshalb prädestiniert für den Außeneinsatz. Es hat sich jedoch gezeigt, daß praktisch alle diese Folien, egal ob als Einzel-Folien oder Verbundfolien, insbesondere bei Außenanwendungen und gleichzeitig auftretender, für längere Zeit einwirkender thermischer Belastung mehr oder weniger mit unerwünschter Versprödung reagieren, wenn die Folie oder der Verbund eine Materialstärke von mindestens 150, 200, 250 $\mu$m oder mehr aufweist. Dies schränkt die Verwendungsmöglichkeiten der Folien z. B. in wärmeren geographischen Regionen oder allgemein bei Anwendungen, insbesondere Außenanwendungen in heißer Umgebung ein.

Es wurde daher die Aufgabe gesehen ein Material bzw. einen Formkörper bereitzustellen, aus dem sich Einzel-Folien und Verbundfolien mit einer Materialstärke von mindestens 150 $\mu$m oder darüber herstellen lassen, die nach längerer thermischer Belastung keine oder nur sehr geringe Versprödung zeigen.

Die Aufgabe wird gelöst durch einen Formkörper aus Kunststoff mit einer Materialstärke von mindestens 150 $\mu$m, enthaltend eine Polymermischung enthaltend einen schlagzähmodifizierten Poly(meth)acrylat-Kunststoff aus einer Poly(meth)acrylat-Matrix und darin verteilten Elastomerteilchen, und ein Fluor-Polymer, wobei der Anteil des Fluorpolymeren in der Mischung 40 bis 80 Gew.-% beträgt, und die Polymermischung aus dem schlagzähmodifizierten Poly(meth)acrylat-Kunststoff und dem Fluor-Polymeren in einer außen liegenden Schicht mit einer durchgängigen Materialstärke von mindestens 10 μm vorliegt,

**dadurch gekennzeichnet, dass**

der schlagzähmodifizierte Poly(meth)acrylat-Kunststoff aus 25 bis 60 Gew.-% einer Poly(meth)acrylat-Matrix und 75 bis 40 Gew.-% Elastomerteilchen besteht.

Der Erfindung liegt die Erkenntnis zugrunde, daß Polymermischungen enthaltend einen schlagzähmodifizierten Poly(meth)acrylat-Kunststoff aus einer Poly(meth)acrylat-Matrix und darin verteilten Elastomerteilchen, und einem Fluor-Polymeren ab einer Materialstärke von etwa mindestens 150, insbesondere mindestens 200 oder mindestens 250 μm zu einer gegenüber dünneren Teilen erhöhten Langzeit-Versprödung neigen. Die erhöhte Langzeit-Versprödungsneigung zeigt sich dabei unabhängig davon, ob es sich um Formkörper handelt, die ganz aus der Polymermischung bestehen oder ob es sich um Verbund-Formkörper handelt, bei denen die Polymermischung aus dem schlagzähmodifizierten Poly(meth)acrylat-Kunststoff und dem Fluor-Polymeren in einer außen liegenden Schicht mit einer durchgängigen Materialstärke von mindestens 10 μm vorhanden ist. Die erhöhte Langzeit-Versprödung ist ein Problem bei exponierten Einzelfolien, die z. B. als Bedachungselement eingesetzt werden sollen, als auch bei Verbundteilen, z. B. Automobilaußenteilen, die mit einer Schutzschicht aus der Polymermischung versehen sind. Die Teile können je nach Beschaffenheit und Exposition nach einigen Monaten oder wenigen Jahren unansehnlich werden. Es besteht daher ein Bedarf die Neigung zur Langzeit-Versprödung bei solchen Teilen bzw. Formkörpern zu verringern.

Die erhöhte Langzeit-Versprödungsneigung z. B. bei Folien, die ganz aus der Polymermischung bestehen, geht experimentell einher mit einem Abfall der Bruchdehnung nach 10-tägiger Lagerung bei 60° C auf deutlich unter 50 % des Wertes ohne 10-tägige thermische Belastung. Diese experimentelle Korrelation wird bei dünnen Folien unter 150 oder unter 100 μm Materialstärke nicht festgestellt. Hier tritt praktisch kein relevanter Abfall der Bruchdehnung nach 10-tägiger Lagerung bei 60° C auf. Trotzdem tritt der Effekt der Langzeit-Versprödungsneigung auch bei Verbundformkörpern auf, bei denen die erwähnte Polymermischung in einer außen liegenden Schicht mit einer durchgängigen Materialstärke von mindestens 10 μm vorhanden ist.

Es wurde die Theorie entwickelt, daß Teile bzw. Formkörper mit einer Materialstärke von etwa mindestens 150 μm, die ganz aus einer Polymermischung aus einem schlagzähmodifizierten Poly(meth)acrylat-Kunststoff und einem Fluor-Polymeren bestehen, in der Praxis bei Außenbewitterung oder auch experimentell bei 10-tägiger Lagerung bei 60° C aufgrund ihrer durch die Materialstärke behinderten Querkontraktion der Masse nach thermischen Belastungen verstärkt zu frühzeitigem Versagen bei mechanischer Belastung neigen. Bei Verbundformkörpern, bei denen die erwähnte Polymermischung in einer außen liegenden Schicht mit einer durchgängigen Materialstärke von mindestens 10 μm vorhanden ist, tritt dieser Effekt in ähnlicher Weise auf, weil hier die feste Anbindung zum Untergrund in ähnlicher Weise die Querkontraktion der Polymermischung in der außen liegenden Schicht behindert. Bei einem einzelnen dünnen Formkörper, z. B. einer Folie, tritt dieser Effekt weder in der Praxis noch experimentell bei 10-tägiger Lagerung bei 60° C auf. Aufgrund dieser Erkenntnis betrifft das zu lösende Problem einheitlich Formkörper aus Kunststoff mit einer Materialstärke von mindestens 150 μm, enthaltend eine Polymermischung aus einem schlagzähmodifizierten Poly(meth)acrylat-Kunststoff und einem Fluor-Polymeren in einer außen liegenden Schicht mit einer durchgängigen Materialstärke von mindestens 10 μm vorliegt, unabhängig davon ob der Formkörper ganz aus der Polymermischung besteht oder es sich um einem Verbundformkörper mit einer dünnen außen liegenden Schicht aus der Polymermischung handelt.

Die Lösung des Problems betrifft eine Auswahl des Mischungsverhältnisses der Polymermischung aus dem schlagzähmodifizierten Poly(meth)acrylat-Kunststoff und dem Fluor-Polymeren, wobei der Anteil des Fluorpolymeren in der Mischung 40 bis 80 Gew.-% beträgt. Weiterhin muß der schlagzähmodifizierte Poly(meth)acrylat-Kunststoff aus 25 bis 60 Gew.-% einer Poly(meth)acrylat-Matrix und 75 bis 40 Gew.-% Elastomerteilchen bestehen.

In besonderen Ausführungsformen besitzen diese Elastomerteilchen einen mittleren Teilchendurchmesser von 10 bis 1000 nm, von 20 bis 600 nm, von 30 bis 500 nm oder von 50 bis 150 nm.

Die Maßnahmen stellen insgesamt sicher, daß Teile mit einer Materialstärke von mindestens 150 μm, die ganz aus der Polymermischung bestehen, eine ausreichende Bruchdehnung nach 10-tägiger Lagerung bei 60° C von mindestens 150 % aufweisen. Die Bruchdehnung nach 10-tägiger Lagerung bei 60° C beträgt in diesem Fall noch mindestens 60 % des Wertes ohne 10-tägige thermische Belastung.

Diese Maßnahmen gelten auch für Verbundteile mit einer Materialstärke von mindestens 150 μm, bei denen die Polymermischung aus dem schlagzähmodifizierten Poly(meth)acrylat-Kunststoff und dem Fluor-Polymeren in einer außen liegenden Schicht mit einer durchgängigen Materialstärke von mindestens 10 μm vorliegt. Allerdings erfolgt hier die experimentelle Überprüfung der Eignung nicht durch Messung der Bruchdehnung nach 10-tägiger Lagerung bei 60° C sondern durch Messung der Dehnung bei Beginn der Rißbildung in der außen liegenden Schicht nach 10-tägiger Lagerung des Verbundteils bei 60°C. Dieser Wert soll bei Verbundteilen mindestens 50 % des Wertes ohne 10-tägige Lagerung bei 60 °C betragen. Der Ausgangswert ohne 10-tägige Lagerung bei 60 °C beträgt bei Verbundteilen mindestens 100 %.

## Ausführung der Erfindung

### Die Polymermischung

Die Polymermischung enthält einen schlagzähmodifizierten Poly(meth)acrylat-Kunststoff und ein Fluor-Polymer, und ist **dadurch gekennzeichnet, dass** der Anteil des Fluorpolymeren in der Mischung 40 bis 80, insbesondere 50 bis 70 Gew.-% beträgt.

### Schlagzähmodifizierter Poly(meth)acrytat-Kunststoff

Der schlagzähmodifizierte Poly(meth)acrylat-Kunststoff besteht aus 25 bis 60 Gew.-%, bevorzugt 30 bis 50 Gew.-% einer Poly(meth)acrylat-Matrix und 75 bis 40 Gew.-%, bevorzugt 70 bis 50 Gew.-% Elastomerteilchen.

In besonderen Ausführungsformen ist der mittlere Teilchendurchmesser der Elastomerteilchen von 10 bis 1000 nm, von 20 bis 600 nm, von 30 bis 500 nm oder von 50 bis 150 nm (Messung z. B. mit der Ultrazentrifugenmethode).

Bevorzugt weisen die in der Poly(meth)acrylat-Matrix verteilten Elastomerteilchen einen Kern mit einer weichen Elastomerphase und einer daran gebundenen Hartphase auf.

Der schlagzähmodifizierte Poly(meth)acrylat-Kunststoff (szPMMA) besteht aus einem Anteil Matrixpolymer, polymerisiert aus mindestens 80 Gew.-% Einheiten Methylmethacrylat sowie gegebenenfalls 0 bis 20 Gew.-% Einheiten von mit Methylmethacrylat copolymerisierbaren Monomeren und einem in der Matrix verteilten Anteil an Schlagzähmodifizierungsmitteln auf Basis von vernetzten Poly(meth)acrylaten

Das Matrixpolymer besteht insbesondere aus 80 bis 100, vorzugsweise zu 90 - 99,5 Gew.-%, aus radikalisch polymerisierten Methylmethacrylat-Einheiten und gegebenenfalls zu 0 - 20, bevorzugt zu 0,5 - 10 Gew.-% aus weiteren radikalisch polymerisierbaren Comonomeren, z. B. $C_1$- bis $C_4$-Alkyl(meth)acrylaten, insbesondere Methylacrylat, Ethylacrylat oder Butylacrylat. Vorzugsweise liegt das mittlere Molekulargewicht $M_w$ (Gewichtsmittel) der Matrix im Bereich von 90.000 g/mol bis 200.000 g/mol, insbesondere 100.000 g/mol bis 150.000 g/mol (Bestimmung von $M_w$ mittels Gelpermeationschromatographie unter Bezug auf Polymethylmethacrylat als Eichstandard) entsprechen. Die Bestimmung des Molekulargewichts $M_w$ kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 90 bis 99,5 Gew.-% Methylmethacrylat und 0,5 bis 10 Gew.-% Methylacrylat. Die Vicaterweichungstemperaturen VET (ISO 306-B50) können im Bereich von mindestens 90, bevorzugt von 95 bis 112 °C liegen.

### Das Schlagzähmodifizierungsmittel

Die Polymethacrylat-Matrix enthält ein Schlagzähmodifizierungsmittel, welches z. B. ein zwei- oder dreischalig aufgebautes Schlagzähmodifizierungsmittel sein kann.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

Schlagzähmodifizierungsmittel

Das Schlagzähmodifizierungsmittel wird in an sich bekannter Weise durch Perlpolymerisation oder durch Emulsionspolymerisation hergestellt und die so erhaltenen, vernetzten Teilchen können eine mittlere Teilchengröße im Bereich von 10 bis 1000 nm, von 20 bis 600 nm, von 30 bis 500 nm oder von 50 bis 150 nm aufweisen.

Diese Teilchen bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 5 Gew.-% an $C_1$-$C_4$-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei- oder einen dreischichtigen Kern-Schale-Aufbau aufweisen können und durch Emulsionspolymerisation erhalten werden (s. z. B. EP-A 0 113 924, EP-A 0 522 351, EP-A 0 465 049 und EP-A 0 683 028). Geeignete Teilchengrößen dieser Emulsionspolymerisate liegen beispielsweise im Bereich von 10 -150, bevorzugt 20 bis 120 nm, besonders bevorzugt 50 - 100 nm liegen.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z.

B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-% , besonders bevorzugt im Bereich von 25 bis 35 Gew.-%.

Schlagzähmodifizierte Polymethacrylat-Formmassen

Im Extruder können das Schlagzähmodifizierungsmittel und Matrix-Polymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Folien, Profilen, Platten oder Spritzgußteilen weiterverarbeitet werden.

**Zweiphasiger Schlagzähmodifier gemäß EP 0 528 196 A1**

Bevorzugt, insbesondere zur Folienherstellung, jedoch nicht auf diese beschränkt, wird ein, im Prinzip aus EP 0 528 196 A1 bekanntes System verwendet, das ein zweiphasiges, schlagzähmodifiziertes Polymerisat ist aus:

a1) 10 bis 95 Gew.-% einer zusammenhängenden Hartphase mit einer Glasübergangstemperatur $T_{mg}$ über 70 °C, aufgebaut aus

a11) 80 bis 100 Gew.-% (bezogen auf a1) Methylmethacrylat und
a12) 0 bis 20 Gew.-% eines oder mehrerer weiterer ethylenisch ungesättigter, radikalisch polymerisierbarer Monomeren, und

a2) 90 bis 5 Gew.-% einer in der Hartphase verteilten Zähphase mit einer Glasübergangstemperatur $T_{mg}$ unter -10 °C, aufgebaut aus

a21) 50 bis 99,5 Gew.-% eines $C_1$-$C_{10}$-Alkylacrylats (bezogen auf a2)
a22) 0,5 bis 5 Gew.-% eines vernetzenden Monomeren mit zwei oder mehr ethylenisch ungesättigten, radikalisch polymerisierbaren Resten, und
a23) gegebenenfalls weiteren ethylenisch ungesättigten, radikalisch polymerisierbaren Monomeren,

wobei wenigstens 15 Gew.-% der Hartphase a1) mit der Zähphase a2) kovalent verknüpft sind.

Das zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50, vorzugsweise zu mehr als 80 Gew.-%, aus niederen Alkylacrylaten aufgebaut ist, woraus sich eine Glasübergangstemperatur $T_{mg}$ dieser Phase von unter -10 °C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropantriacrylat und -trimethacrylat sowie Pentaerythrit-tetraacrylat und - tetramethacrylat genannt. Weitere Beispiele sind hierzu in US 4,513,118 angegeben.

Die unter a23) genannten ethylenisch ungesättigten, radikalisch polymerisierbaren Monomeren können beispielsweise Acryl- bzw. Methacrylsäure sowie deren Alkylester mit 1 - 20 Kohlenstoffatomen, sofern noch nicht genannt, sein, wobei der Alkylrest linear, verzweigt oder cyclisch sein kann. Desweiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse A führen.

Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Vorteilhafterweise kann die Teilchengröße durch den Einsatz eines Saatlatex gesteuert werden. Teilchen mit einer mittleren Teilchengröße (Gewichtsmittel) unter 130 nm, vorzugsweise unter 70 nm, und mit einer Uneinheitlichkeit $U_{80}$ der Teilchengröße unter 0,5, ($U_{80}$ wird aus einer integralen Betrachtung der Teilchengrößenverteilung, die per Ultrazentrifuge bestimmt wird, ermittelt. Es gilt: $U_{80} = [(r_{90} - r_{10}) / r_{50}] -1$, wobei $r_{10}$, $r_{50}$, $r_{90}$ = mittlerer integraler Teilchenradius für den gilt 10,50,90 % der Teilchenradien liegen unter und 90,50,10 % der Teilchenradien liegen über diesem Wert) vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z. B. 0,01 bis 0,5 Gew.-% Alkali- oder Ammoniumperoxodisulfat, bezogen auf die Wasserphase eingesetzt und die Polymerisation wird bei Temperaturen von 20 bis 100 °C ausgelöst. Bevorzugt werden Redox-Systeme, beispielsweise eine Kombination aus 0,01 bis 0,05 Gew.-% organischem Hydroperoxid und 0,05 bis 0,15 Gew.-% Natriumhydroxymethylsulfinat , bei Temperaturen von 20 bis 80 °C verwendet.

Die mit der Zähphase a2) zumindest zu 15 Gew.-% kovalent verbundene Hartphase a1) weist eine Glasübergangstemperatur von wenigstens 70 °C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glasübergangstemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

In einer bevorzugten Ausführungsform enthält die Hartphase niedermolekulare und/oder einpolymerisierte UV-Absorber in Mengen von 0,1 bis 10 Gew.-%, bevorzugt 0,5 - 5 Gew.-%, bezogen auf A als Bestandteil der comonomeren Komponenten a12) in der Hartphase. Beispielhaft für die polymerisierbaren UV-Absorber, wie sie u.a. in der US 4 576 870 beschrieben sind, seien 2-(2'-Hydroxyphenyl)-5-methacrylamidobenzotriazol oder 2-Hydroxy-4-methacryloxybenzophenon genannt. Niedermolekulare UV-Absorber können beispielsweise Derivate des 2-Hydroxybenzophenons oder des 2-Hydroxyphenylbenzotriazols oder Salicylsäurephenylester sein. Im allgemeinen weisen die niedermolekularen UV-Absorber ein Molekulargewicht von weniger als $2 \times 10^3$ (g/mol) auf. Besonders bevorzugt sind UV-Absorber mit geringer Flüchtigkeit bei der Verarbeitungstemperatur und homogener Mischbarkeit mit der Hartphase a1) des Polymerisats A.

## Lichtschutzmittel

Unter Lichtschutzmitteln sollen UV-Absorber, UV-Stabilisatoren und Radikalfänger verstanden werden.

Optional enthaltene UV-Schutzmittel sind z. B. Derivate des Benzophenons, dessen Substituenten wie Hydroxyl- und/oder Alkoxygruppen sich meist in 2- und/oder 4-Stellung befinden. Hierzu zählen 2-Hydroxy-4-n-octoxybenzophenon, 2,4-Dihydroxybenzophenon, 2,2'-Dihydroxy-4-methoxybenzophenon, 2,2',4,4'-Tetrahydroxybenzophenon, 2,2'-Dihydroxy-4,4'-dimethoxybenzophenon, 2-Hydroxy-4-methoxybenzophenon. Desweiteren sind substituierte Benztriazole als UV-Schutz-Zusatz sehr geeignet, wozu vor allem 2-(2-Hydroxy-5-methylphenyl)-benztriazol, 2-[2-Hydroxy-3,5-di-(alpha,alpha-dimethyl-benzyl)-phenyl]-benztriazol, 2-(2-Hydroxy-3,5-di-t-butylphenyl)-benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)-benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol, Phenol, 2,2'-methylenbis[6-(2H-benztriazol-2-yl)-4-(1,1,3,3,-tetramethylbutyl)] zählen.

Neben den Benztriazolen kann auch ein UV-Absorber der Klasse der 2-(2'-Hydroxyphenyl)-1,3,5-Triazine, wie beispielweise Phenol, 2-(4,6-diphenyl-1,2,5-triazin-2-xy)-5-(hexyloxy), eingesetzt werden.

Weiterhin einsetzbare UV-Schutzmittel sind 2-Cyano-3,3-diphenylacrylsäureethylester, 2-Ethoxy-2'-ethyl-oxalsäurebisanilid, 2-Ethoxy-5-t-butyl-2'-ethyl-oxalsäurebisanilid und substituierte Benzoesäurephenylester.

Die Lichtschutzmittel bzw. UV-Schutzmittel können als niedermolekulare Verbindungen, wie sie vorstehend angegeben sind, in den zu stabilisierenden Polymethacrylatmassen enthalten sein. Es können aber auch UVabsorbierende Gruppen in den Matrixpolymermolekülen kovalent nach Copolymerisation mit polymerisierbaren UV-Absorptionsverbindungen, wie z. B. Acryl-, Methacryl oder Allylderivaten von Benzophenon- oder Benztriazolderivaten, gebunden sein.

Der Anteil von UV-Schutzmitteln, wobei dies auch Gemische chemisch verschiedener UV-Schutzmittel sein können, beträgt in der Regel 0,01 bis 10 Gew.-%, vor allem 0,01 bis 5 Gew.-%, insbesondere 0,02 bis 2 Gew.-% bezogen auf das (Meth)acrylatcopolymer der Schicht a).

Als Beispiel für Radikalfänger/UV-Stabilisatoren seien hier sterisch gehinderte Amine, die unter dem Namen HALS (Hindered Amine Light Stabilizer) bekannt sind genannt. Sie können für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können.

Beispiele für stabilisierend wirkende HALS-Verbindungen, die auch als Gemische eingesetzt werden können sind:

Bis-(2,2,6,6-tetramethyl-4-piperidyl)-sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-β-hydroxyethyl-2,2,6,6-tetramethyl-4-hydroxypiperidin-bernsteinsäureester) oder Bis-(N-methyl-2,2,6,6-tetramethyl-4-piperidyl)-sebacat.

**Fluorpolymere**

Unter Fluor-Polymeren sind im Rahmen der vorliegenden Erfindung Polymere zu verstehen, die durch die radikalische Polymerisation von olefinisch ungesättigten Monomeren erhalten werden können, an deren Doppelbindung sich mindestens ein Fluor-Substituent befindet. Hierbei sind auch Copolymere eingeschlossen. Diese Copolymere können neben einem oder mehreren fluorenthaltenden Monomeren weitere Monomere enthalten, die mit diesen fluorenthaltenden Monomeren copolymerisierbar sind. Das bevorzugte Fluorpolymer ist Polyvinylidenfluorid (PVDF).

Zu den fluorenthaltenden Monomeren gehören unter anderem Chlortrifluorethylen, Fluorvinylsulfonsäure, Hexafluorisobutylen, Hexafluorpropylen, Perfluorvinylmethylether, Tetrafluorethylen, Vinylfluorid und Vinylidenfluorid. Von diesen ist Vinylidenfluorid besonders bevorzugt.

Wichtig für die vorliegende Erfindung ist, daß das fluorenthaltende Polymer zu Folien extrudiert werden kann. Dementsprechend kann das Molekulargewicht in weiten Bereichen variieren, falls Hilfsstoffe oder Copolymere verwendet werden. Im allgemeinen liegt das Gewichtsmittel des Molekulargewichts der fluorenthaltenden Polymere im Bereich von 100 000 bis 200 000, bevorzugt im Bereich von 110 000 bis 170 000, ohne daß hierdurch eine Beschränkung erfolgen soll.

**Formkörper**

**a) Formkörper, der ganz aus der Polymermischung besteht**

Der erfindungsgemässe Formkörper kann in Bezug auf seine polymere Zusammensetzung ganz aus der Polymermischung aus dem schlagzähmodifizierten Poly(meth)acrylat-Kunststoff und dem Fluor-Polymeren bestehen. In der Regel sind in an sich bekannter Weise noch übliche Zusatz-, Hilfs- und/oder Füllstoffe, wie z. B. Thermostabilisatoren, UV-Stabilisatoren, UV-Absorber, Antioxidantien und/oder Farbmittel, Pigmente oder organische Farbstoffe, enthalten. Bevorzugt sind nicht mehr als 10, besonders bevorzugt nicht mehr als 5, insbesondere nicht mehr als 2 Gew.-% übliche Zusatz-, Hilfs- und/oder Füllstoffe enthalten. Gegebenenfalls kann der Formkörper auch gar keine Zusatz-, Hilfs- und/oder Füllstoffe enthalten, enthalten.

Der erfindungsgemässe Formkörper kann z. B. eine Folie mit einer Foliendicke von 150 bis 2000, bevorzugt 200 bis 1000, besonders bevorzugt 300 bis 500 μm sein.

Die erfindungsgemässe Folie kann eine Bruchdehnung ohne 10-tägige Lagerung bei 60° C von mindestens 250, bevorzugt mindestens 280, insbesondere mindestens 300 % aufweisen.

Die erfindungsgemässe Folie kann eine Bruchdehnung nach 10-tägiger Lagerung bei 60° C von mindestens 150, bevorzugt mindestens 175, insbesondere 200 % aufweisen.

Die erfindungsgemässe Folie kann eine Bruchdehnung nach 10-tägiger Lagerung bei 60° C aufweisen, die noch mindestens 60, bevorzugt mindestens 70, insbesondere mindestens 80 % des Wertes ohne 10-tägige thermische Belastung beträgt. Die Folie kann z. B. in einem Membranaufbau enthalten sein, wobei der Membranaufbau zumindest zwei gewölbte und an den Rändern miteinander verschweißte Folien enthält, die einen Hohlraum einschließen. Bekannt sind solche Membranen von Bauwerken wie dem bekannten "Eden-Projekt".

Der erfindungsgemässe Formkörper bzw. die Folie kann in an sich bekannter Weise mittels thermoplastischer Verarbeitung, insbesondere Extrusion oder Spritzguß oder mittels Solvent-Casting hergestellt werden.

Der erfindungsgemässe Formkörper bzw. die Folie kann z. B. als Bedachungselement, Fassadenelement, als Fenster in einem Faltdach für ein Fahrzeug mit faltbarem Stoff- oder Kunststoffverdeck verwendet werden.

**b) Verbundformkörper**

Der erfindungsgemässe Formkörper kann ein Verbundformkörper sein, der zusätzlich zur Schicht mit der Polymermischung aus dem schlagzähmodifizierten Poly(meth)acrylat-Kunststoff und dem Fluor-Polymeren einen weiteren, thermoplastisch verarbeitbaren, mit der Polymermischung verbundenen Kunststoff enthält und die Schicht aus der Polymermischung eine durchgängige Materialstärke von 10 bis 100, bevorzugt 20 bis 80 μm aufweist.

In der Regel sind in der Schicht mit der Polymermischung und gegebenenfalls auch in dem darunterliegenden weiteren Kunststoff an sich bekannter Weise noch übliche Zusatz-, Hilfs- und/oder Füllstoffe, wie z. B. Thermostabilisatoren, UV-Stabilisatoren, UV-Absorber, Antioxidantien und/oder Farbmittel, Pigmente oder organische Farbstoffe, enthalten. Bevorzugt sind nicht mehr als 10, besonders bevorzugt nicht mehr als 5, insbesondere nicht mehr als 2 Gew.-% übliche Zusatz-, Hilfs- und/oder Füllstoffe enthalten. Gegebenenfalls können die Kunststoffe auch gar keine Zusatz-, Hilfs- und/oder Füllstoffe enthalten. enthalten. Besonders bevorzugt sind in der Schicht der Polymermischung aus dem schlagzähmodifizierten Poly(meth)acrylat-Kunststoff und dem Fluor-Polymeren 0,01 bis 10 Gew.-% eines Lichtschutzmittels enthalten sind.

Der in Verbundformkörper enthaltene weitere Kunststoff kann ein Polymethylmethacrylat, schlagzäh modifiziertes Polymethylmethacrylat, Polycarbonat, Polystyrol, Acrylsäureester/Styrol/Acrylnitril-Pfropfcopolymer (ASA), Styrol-Acryl-Nitril (SAN), Polyethylentherephthalat (PET), glycolmodifiziertes Polyethylentherephthalat (PETG), Polybutylenterephthalat-Kunststoff (PBT), Polyvinylchlorid-Kunststoff (PVC), Polyolefin-Kunststoff, Cycloolefincopolymer (COC), Acrylnitril-Butadien-Stryrol (ABS) oder eine Mischung (Blend) verschiedener thermoplastischer Kunststoffe sein.

Der erfindungsgemässe Verbundformkörper weist eine Dehnung bei Beginn der Rissbildung in der Schicht der Polymermischung aus dem schlagzähmodifizierten Poly(meth)acrylat-Kunststoff und dem Fluor-Polymeren von mindestens 100, bevorzugt 120, besonders bevorzugt 150 % in Anlieferung und nach 10-tägiger Lagerung bei 60° C von mindestens 50, bevorzugt mindestens 60, insbesondere mindestens 70 % dieses Werts auf.

Der erfindungsgemässe Verbundformkörper kann in an sich bekannter Weise mittels Folienlamination, Coextrusion, Extrusionsbeschichten, Insert-Moulding-Verfahren oder Solvent-Cast-Verfahren hergestellt werden.

Der erfindungsgemässe Verbundformkörper kann z. B. als Bedachungselement, Fassadenelement, Teile von Haushaltsgeräten, Kommunikationsgeräten, Hobby- oder Sportgeräten, Karosserieteile oder Teile von Karosserieteilen im Automobil-, Schiffs- oder Flugzeugbau wie z. B. Beplankungen, Stossfänger, Kotflügel, Blenden oder Zierleisten verwendet werden.

**Folien und deren Herstellung**

Aus der erfindungsgemässen Polymermischung können Folien in an sich bekannter Weise durch Extrusion hergestellt werden. Geeignet sind z. B. Verfahren gemäß der DE 102 36 045 A1 oder gemäß der WO 00/37237. Es wird zunächst eine Mischung des schlagzähmodifizierten Poly(meth)acrylat und des Fluorpolymeren hergestellt.

Im allgemeinen sind die Fluor-Polymere, die schlagzähmodifizierten Poly(meth)acrylate kommerziell erhältlich.

Die Mischungen enthalten 40 bis 80 Gew.-%, bevorzugt 50 bis 70 Gew.-% Fluorpolymere, bevorzugt Polyvinylidenfluorid (PVDF) und 60 bis 20 Gew.-%, bevorzugt 50 bis 30 Gew.-% schlagzähmodifiziertes Poly(meth)acrylat, wobei diese Werte auf die Gesamtmischung bezogen sind. Das bevorzugte PVDF kann als Homopolymer und/ oder Copolymer verwendet werden.

Die extrudierbaren Polymermischungen können gegebenenfalls in geringen Anteilen, z. B. 0 bis 20, bevorzugt 0 bis 10 oder 0 bis 5 Gew.-% weitere Polymere enthalten, die sowohl mit den Fluor-Polymeren als auch mit den schlagzähmodifizierten Poly(meth)acrylat mischbar sind. Hierzu gehören unter anderem Polycarbonate, Polyester, Polyamide, Polyimide, Polyurethane und Polyether. Besonders bevorzugt bestehen die Folien überwiegend, zu 98 bis 100 Gew.-% oder ausschließlich aus schlagzähmodifizierten Poly(meth)acrylat und Fluorpolymeren.

Mischbarkeit der verschiedenen Substanzen bedeutet, daß die Komponenten eine homogene Mischung bilden, die keine Trübungen aufweist, welche auf eine Phasentrennung zurückzuführen sind.

Des weiteren können die Folien in der Fachwelt weithin bekannte Zusatzstoffe enthalten. Hierzu gehören unter anderem Antistatika, Antioxidantien, Farbstoffe, Flammschutzmittel, Füllstoffe, Lichtstabilisatoren und organische Phosphorverbindungen, wie Phosphite oder Phosphonate, Pigmente, Verwitterungsschutzmittel und Weichmacher.

Erfindungsgemäß können alle bekannten Lichtschutzmittel, insbesondere UV-Absorber eingesetzt werden. Besonders bevorzugt sind UV-Absorber vom Typ Benztriazol und Hydroxyphenyl-Triazin.

Ganz besonders bevorzugt sind UV-Absorber, die auf Triazin basieren. Diese UV-Absorber sind besonders haltbar und witterungsstabil. Desweiteren haben sie eine ausgezeichnete Absorptionscharakteristik.

Bevorzugt wird bei dem Verfahren zur Herstellung von Folien zunächst eine Trockenmischung hergestellt, die zumindest ein schlagzähmodifizierten Poly(meth)acrylat und ein Fluor-Polymer enthält.

Trockenmischen bedeutet im Rahmen der Erfindung, daß aus dieser Mischung im Lauf des weiteren Verfahrens kein Lösungsmittel entfernt werden muß. Lösungsmittelreste, die keine weitere Aufarbeitung benötigen bzw. im Extruder durch Vakuum von der Mischung getrennt werden können, sind erlaubt. Das Mischen kann in herkömmlichen, für diesen Zweck weithin bekannten Vorrichtungen erfolgen. Die Temperatur bei der das Mischen erfolgt, liegt unterhalb der Geltemperatur der Mischung. Bevorzugt wird dieser Schritt bei Raumtemperatur durchgeführt.

Diese Mischung kann z. B. auf eine Walze extrudiert werden, die eine Temperatur kleiner als 40°C aufweist, wobei eine Folie geformt wird. Das Extrudieren von Polymeren zu Folien ist weithin bekannt und beispielsweise in Kunststoffextrusionstechnik II, Hanser Verlag, 1986, S.125 ff. beschrieben. Die heiße Schmelze wird aus der Düse eines Extruders auf eine einzelne Kühlwalze (Chill-Roll-Walze) gegeben. Diese Chill-Roll-Walzen sind in der Fachwelt weithin bekannt, wobei zum Erhalt eines hohen Glanzes polierte Walzen verwendet werden. In dem erfindungsgemäßen Verfahren können aber auch andere Walzen als Kühlwalzen verwendet werden. Eine weitere Walze nimmt die auf der ersten Walze (Chill-Roll-Walze) abgekühlte Schmelze zunächst auf, wobei man eine einschichtige Folie erhält, die mit weiteren Schichten versehen werden kann.

Damit die entstehende Folie weitgehend frei von Verunreinigungen ist, wird vor dem Eintritt der Schmelze in die Düse ein Filter angeordnet. Die Maschenweite des Filters richtet sich im allgemeinen nach den eingesetzten Ausgangsstoffen und kann dementsprechend in weiten Bereichen variieren. Im allgemeinen liegen sie aber im Bereich von 300 μm bis 20 μm. Es können auch Filter mit mehreren Sieben unterschiedlicher Maschenweite vor dem Düseneintritt angeordnet werden. Diese Filter sind in der Fachwelt weithin bekannt und kommerziell erhältlich. Als weiterer Anhaltspunkt für den Fachmann können die beigefügten Beispiele dienen.

Um Folien mit hoher Güte zu erhalten, ist es des weiteren vorteilhaft besonders reine Rohstoffe einzusetzen.

PVDF bildet bei Temperaturen oberhalb von ca. 240°C zunehmend Gele (Herstellerangabe der Fa. Solvay). Diese Gelpartikel lassen sich nur relativ schlecht durch Filtrieren entfernen. Dementsprechend ist es notwendig, eine mögliche Gelbildung zu vermeiden. Daher wird bei Temperaturen extrudiert, die möglichst weit unterhalb der Geltemperatur liegen. Zur Herstellung von gelkörperarmen Folien bieten sich auch pulverförmige PVDF-Lieferformen an, deren mittlere Partikelgröße beispielsweise 0,2 mm beträgt. Diese werden im Scherfeld des Extruders kompletter aufgeschlossen.

Allerdings soll die Temperatur hoch genug sein, damit die Mischung zu einer Folie extrudiert werden kann, die eine hervorragende Oberflächengüte und eine möglichst geringe Trübung aufweist. Die optimale Temperatur ist beispielsweise von der Zusammensetzung der Mischung abhängig und kann daher in weiten Bereichen schwanken. Aber bevorzugte Temperaturen der Mischung bis zum Düseneintritt liegen im Bereich von 150 bis 210 °C, besonders bevorzugt im Bereich von 180 bis 200 °C. Hierbei muß die Temperatur der Mischung über den gesamten Formungsprozeß unterhalb der Geltemperatur gehalten werden.

Der Druck mit dem die geschmolzenen Mischung in die Düse gepreßt wird, kann beispielsweise über die Geschwindigkeit der Schnecke gesteuert werden. Der Druck liegt im allgemeinen in einem Bereich von 40 bis 100 bar, ohne daß das erfindungsgemäße Verfahren hierdurch beschränkt wird. Die Geschwindigkeit, mit der die Folien erfindungsgemäß erhalten werden können, ist dementsprechend größer als 5 m/min, insbesondere größer als 10 m/min, ohne daß hierdurch eine Beschränkung des erfindungsgemäßen Verfahrens erfolgen soll. Weitere Hinweise bezüglich der allgemeinen Verfahrensparameter erhält der Fachmann durch die beigefügten Beispiele.

Damit die erhaltene Folie eine hohe Oberflächengüte und eine geringe Trübung aufweist ist es wesentlich, daß man die Temperatur der Düse höher als die Temperatur der Mischung vor dem Düseneintritt, aber niedriger als die Geltemperatur wählt.

Bevorzugt wird die Düsentemperatur 5 bis 20 %, besonders bevorzugt 10 bis 20 % und ganz besonders bevorzugt 12 bis 18 % höher eingestellt als die Temperatur der Mischung vor dem Düseneintritt. Dementsprechend liegen bevorzugte Temperaturen der Düse im Bereich von 160°C bis 235°C, besonders bevorzugt 200 °C bis 230°C und ganz besonders bevorzugt 210°C bis 220°C.

Nachdem die Folie erhalten wurde, kann diese mit weiteren Folien laminiert werden. Diese Folien können zum Schutz der PVDF/szPMMA-enthaltenden Schicht dienen. Des weiteren kann hierdurch eine weitere Verarbeitung der Folien erleichtert werden, da diese Kunststofffolien eine besonders hohe Haftfähigkeit auf Harzen aufweisen können, die bei nachfolgenden Prozessen auf bzw. an die Folien gespritzt werden.

Besonders bevorzugt sind diese Schichten, die beispielsweise zum Schutz oder zur Verbesserung der Haftfähigkeit auf die PVDF/szPMMA-enthaltende Schicht aufgebracht werden können, unter anderem aus Polyestern, wie Polybutylenterephthalat (PBT), Polyethylenterephthalat (PET), und Polyolefinen, wie Polyvinylchlorid (PVC), Polypropylen (PP), Polyethylen (PE), Acrylnitril-Butadien-Styrol-Copolymere (ABS), ABS/ASA-Blends (ASA = Acrylnitril-Styrol-Acrylester-Copolymere), Polycarbonaten und Polyamiden sowie Mischungen dieser Polymere.

Die PVDF/szPMMA-enthaltenden Folien können auch mit Pigmenten versehen oder mit Farbstoffen bedruckt werden. Es ist auch möglich auf diesen Folien metallische Effekte zu erzielen. Diese Prozesse sind dem Fachmann bekannt und werden beispielsweise als gravure printing, gravure coating und micro gravure coating bezeichnet.

Auf diese mit Dekor oder anderen Verzierungen versehene Schicht können wiederum weitere Schichten aufgebracht werden, die zur Verbesserung der Haftung von nachfolgend aufgebrachtem Polymer dienen können.

Das Aufbringen dieser Schichten durch Kolamineren kann bei Raumtemperatur oder bei leicht erhöhter Temperatur erfolgen, so daß die Oberflächengüte und die Trübung der PVDF/PMMA-enthaltenden Schicht nicht geschmälert wird. Diese Verfahren sind in der Fachwelt weithin bekannt und beispielsweise in Kunststoffextrusionstechnik II, Hanser Verlag, 1986, S. 320 ff. beschrieben.

Besonders vorteilhaft ist, daß die zuvor genannten Schritte, d.h., das Herstellen der PVDF/PMMA-enthaltenden Folie, das Bedrucken und das Laminieren mit weiteren Schichten im allgemeinen in einem kontinuierlichen Verfahren durchgeführt werden können.

Auf das Kolaminieren mit weiteren Folien soll das Verfahren der vorliegenden Erfindung jedoch nicht beschränkt werden. Vielmehr können diese Schichten auch durch Lösungsmittelbschichtung (solvent casting) oder durch Extrusionsbeschichtung (extrusion casting) aufgebracht werden, wie dies beispielsweise in der Patentanmeldung WO 96/40480 und WO 88/07416 und in der US-Patentschrift 4 902 557 beschrieben ist.

Es ist für den Fachmann offensichtlich, daß diese Schichten in verschiedenen Anordnungen zu Mehrschichtfolien zusammengefügt werden können. Eine solche Folien kann dementsprechend mehrere Dekorschichten/Druckschichten in unterschiedlicher Reihenfolge aufweisen. Des weiteren können Mehrschichtfolien auch Klebstoffschichten enthalten, die sowohl zum Verbinden von Schichten aus unterschiedlichen Kunststoffen als auch zum Befestigen der Folien auf den zu schützenden Gegenständen dienen können.

### Eigenschaften der Folien

Die erfindungsgemäße Folie kann eine Dicke von 150 bis 2000, bevorzugt von 200 bis 1500, besonders bevorzugt von 400 bis 1000 μm aufweisen.

### Bestimmung der Bruchdehnung

Der für die Charakterisierung der Eigenschaften besonders wichtige Wert der Bruchdehnung mit oder ohne thermische Belastung kann nach folgender Methode bestimmt werden.

Die Bestimmung der Bruchdehnung geschieht bei 23°C und 50% relative Feuchte nach ISO 527-3/2/100 im Falle von Dicken bis 100μm bzw. nach ISO 527/1 B/50 im Falle von Dicken über 100μm. In beiden Fällen beträgt die Dehngeschwindigkeit damit 100%/min. Die Bruchdehnung des Materials wird in Anlieferung und nach 10 Tagen Lagerung im Wärmeschrank, typischerweise bei 60°C bestimmt. Je kleiner das Verhältnis

*Bruchdehnung nach Wärmelagerung* geteilt durch

*Bruchdehnung in Anlieferung*

ausfällt, desto stärker hat die Wärmelagerung zu Versprödung geführt.

Die Bruchdehnung der gerade extrudierten Folie liegt im Anlieferungszustand bei Foliendicken von mindestens 150 μm, z. B. mindestens 200 bis 2000 μm, im Bereich von 200 bis 300 %.

Nach 10-tägiger Lagerung bei 60° C beträgt die Bruchdehnung noch mindestens 150, bevorzugt mindestens 180, besonders bevorzugt mindestens 200, insbesondere mindestens 250 %.

Bei Foliendicken im Bereich von mehr als 150 bis z. B. 2000 oder mehr, bevorzugt 200 bis 750 μm beträgt die Bruchdehnung der Folie nach 10-tägiger Lagerung bei 60° C noch mindestens 60, bevorzugt mindestens 70 % des Wertes ohne 10-tägige thermische Belastung bei 60 °C.

Bei nicht erfindungsgemäßen Mischungsanteilen von schlagzähmodifiziertem Poly(meth)acrylat und Fluorpolymeren, außerhalb des Bereiches von 30 bis 95 Gew.-% Fluorpolymerem, z. B. bei Anteilen an Fluorpolymerem von 25 oder darunter oder mehr als 95 Gew.-% oder darüber fallen die Werte der Bruchdehnung der Folie nach 10-tägiger Lagerung bei 60° C überraschenderweise relativ stark ab, sofern die Teile eine Materialstärke von mindestens 150 μm aufweisen. Es tritt eine merkliche und unerwünschte Versprödung ein, die sich insbesondere bei Außenanwendungen und gleichzeitiger thermischer Exposition, z. B. in wärmeren geographischen Regionen, nachteilig bemerkbar macht.

### Eigenschaften des Verbundkörpers

Ein Verbundformkörper weist zusätzlich zur Schicht mit der Polymermischung aus dem schlagzähmodifizierten Poly(meth)acrylat-Kunststoff und dem Fluor-Polymeren einen weiteren, thermoplastisch verarbeitbaren, mit der Polymermischung verbundenen Kunststoff auf, wobei die Schicht aus der Polymermischung eine durchgängige Materialstärke von 10 bis 100, insbesondere von 30 - 90 μm aufweist. Der Verbundformkörper kann eine beliebige Gesamtdicke bzw. Materialstärke von mindestens 150, z. B. 200 - 5000 μm aufweisen.

Der für die Charakterisierung der Eigenschaften besonders wichtige Wert der Dehnung bei Beginn der Rißbildung in der Schicht der Polymermischung aus dem schlagzähmodifizierten Poly(meth)acrylat-Kunststoff und dem Fluor-Polymeren kann dann nach folgender Methode bestimmt werden. Als Werkstoff für das Substrat wird für diese Prüfmethode bevorzugt ein Kunststoff ausgewählt, dessen Bruchdehnung höher ist als die Dehnung bei Beginn der Rißbildung in der Deckschicht, geeignet ist z. B. Polyethylentherephthalat, LD- oder HD-Polyethylen.

Die Bestimmung der Dehnung bei Rissbildungsbeginn geschieht bei 23°C und 50% relative Feuchte im Rahmen eines Zugversuchs nach ISO 527/1 B/50. Während des Zugversuchs ist die Schicht aus der Polymermischung in geeigneter Weise zu beleuchten, so daß das Auftreten von Rissen in der Deckschicht per Auge visuell erfasst werden kann. Die aktuelle Dehnung bei Auftreten erster Risse in der Deckschicht wird notiert. Der Zugversuch wird mit 5 Probekörpern durchgeführt. Geeignet sind z. B. Probekörper von 1 mm bis 2 mm Gesamtdicke. Als Ergebnis wird dann der Mittelwert der Dehnung bei Beginn der Rissbildung angegeben.

Die Dehnung bei Beginn der Rissbildung wird in Anlieferung und nach 10 Tagen Lagerung im Wärmeschrank, typischerweise bei 60°C bestimmt. Je kleiner das Verhältnis

*Dehnung bei Beginn der Rissbildung nach Wärmelagerung* geteilt durch

*Dehnung bei Beginn der Rissbildung in Anlieferung*

ausfällt, desto stärker hat die Wärmelagerung zur Versprödung der Deckschicht geführt.

**Beispiele**

Es wurden Folien unterschiedlicher Dicke durch Extrusion hergestellt.

Als Ausgangsmaterialien wurden verwendet:

Schlagzähmodifiziertes Poly(meth)acrylat (szPMMA):

Es wurde ein schlagzähmodifizierte Poly(meth)acrylat-Kunststoff aus 33 Gew.-% einer Poly(meth)acrylat-Matrix und 67 Gew.-% Elastomerteilchen mit einem mittleren Teilchendurchmesser von 60 nm eingesetzt. Die in der Poly(meth)acrylat-Matrix verteilten Elastomerteilchen weisen einen Kern mit einer weichen Elastomerphase und einer daran gebundenen Hartphase auf.

Polyvinylidenfluorid (PVDF)
PVDF KT 1000 ist VDF-Homopolymer; Hersteller: Kureha Chemicals, Japan

Die Polymere wurden trocken vermischt und zu Folien extrudiert.

**Bestimmung des Elastomerteilchengehalts**

Zu untersuchendes Material wird zerkleinert, Granulate können direkt verwendet werden, und eine Menge von ca. 1 bis 2 g wird mit einer Analysenwaage (Genauigkeit 0,1 mg) in ein 150 ml-Becherglas genau eingewogen. Die Probe wird unter Rühren (Magnetrührer) bei etwa 50 °C in ca. 80 ml Aceton gelöst, wobei eine deutliche Trübung durch die unlösliche Elastomerphase eintritt.

Die so erhaltene trübe Polymerlösung wird auf einer Laborwaage (Genauigkeit 0,1 g) quantitativ in 4 Zentrifugenbecher (Stahl, je 30 - 50 ml) verteilt, so dass deren Endgewichte jeweils maximal 0,1 g voneinander abweichen. Diese werden in den Rotor der Zentrifuge (mit Kühlung, mindestens 35.000 g) gebracht und mindestens 30 Minuten bei ca. 21.000 Upm (ca. 41.000 RZB) zentrifugiert.

Die nun klaren, überstehenden Lösungen in den Bechern werden abdekantiert, in einem vorgewogenen Wägeglas eingeengt und im Trockenschrank unter Vakuum bis zur Massekonstanz getrocknet (= acetonlöslicher Anteil).

Ebenso werden die Sedimente quantitativ in ein Wägeglas überführt und in gleicher Weise bis zur Massekonstanz getrocknet (= acetonunlöslicher Anteil).

Aus den Wägungen werden, die Massenanteile berechnet:

a)

$$\text{acetonlösl. Anteil [\%]} = \frac{\text{Auswaage [g]} \cdot 100\,\%}{\text{Einwaage [g]}}$$

b)

$$\text{acetonunlösl. Anteil [\%]} = \frac{\text{Auswaage (Sedimente) [g]} \cdot 100\%}{\text{Einwaage [g]}}$$

Je nach Art des im Formkörper enthaltenen Fluor-Polymeren lassen sich für die weitere Auswertung zwei Fälle unterscheiden, die z. B. durch ein paar einfache Vorversuche (Löslichkeitstests) oder durch Elementaranalyse des acetonunlöslichen Anteils (Fluorbestimmung) unterscheiden lassen:

1) Fluor-Polymer ist vollständig in Aceton löslich
Der so bestimmte acetonunlösliche Anteil entspricht dem Elastomerteilchengehalt und ist bezogen auf den gesamten Formkörper. Für den Fachmann des Gebiets ist es ohne Probleme möglich, gegebenenfalls den Anteil des Fluor-Polymeren des Formkörpers zu bestimmen, z. B. durch Elementaranalyse in Kombination mit spektroskopischen Methoden und/oder der Alkoxylbestimmung nach Zeisel, und dann den Elastomerteilchengehalt auf den Anteil des schlagzähmodifizierten Poly(meth)acrylat-Kunststoffs zu beziehen.

2. Fluor-Polymer ist nicht oder nicht vollständig in Aceton löslich:

Die Bestimmung kann gegebenenfalls in einem anderen, von Aceton verschiedenen Lösungsmittel durchgeführt werden, in dem sich das Fluor-Polymer komplett löst.

Falls es nicht möglich ist, ein Lösungsmittel zu finden, in dem sich das Fluor-Polymer komplett löst, dann ist der so bestimmte acetonunlösliche Anteil eine Mischung aus den Elastomerteilchen und unlöslichem Fluorpolymer und ist bezogen auf den gesamten Formkörper. Für den Fachmann des Gebiets ist es ebenfalls ohne Probleme möglich, den Anteil der Elastomerteilchen in dem acetonunlöslichen Anteil (Sediment) zu bestimmen, z. B. durch Bestimmung des Anteils des Fluor-Polymeren durch Elementaranalyse in Kombination mit spektroskopischen Methoden und/oder der Alkoxylbestimmung nach Zeisel, und dann den Elastomerteilchengehalt auf den Anteil des schlagzähmodifizierten Poly(meth)acrylat-Kunststoffs zu beziehen.

| | Anteile [Gew.-%] | | | | | | |
|---|---|---|---|---|---|---|---|
| Bsp. | PMMA [%] | PVDF [%] | Foliendicke [$\mu$m] | Elastomerteilchen-Gehalt des PMMA-Anteils [%] | Bruchdehnung ohne thermische Belastung [%] | Bruchdehnung nach 10 Tagen bei 60 °C [%] | Verhältnis nach/ohne thermische Belastung [%] |
| A | 30 | 70 | 500 | 65 | 262 | 177 | 68 |
| A - Vgl | 30 | 70 | 500 | 0 | 293 | 14 | 5 |
| B | 30 | 70 | 250 | 65 | 299 | 292 | 98 |
| B - Vgl | 30 | 70 | 250 | 0 | 442 | 7 | 2 |
| C - Vgl | 30 | 70 | 50 | 65 | 355 | 305 | 86 |
| D - Vgl | 30 | 70 | 50 | 0 | 393 | 321 | 82 |
| E | 40 | 60 | 200 | 60 | 273 | 205 | 75 |
| F | 40 | 60 | 200 | 40 | 357 | 292 | 82 |
| G - Vgl | 40 | 60 | 200 | 20 | 331 | 9 | 3 |
| Vgl = Vergleichsbeispiel "PMMA" bedeutet Standard-PMMA oder schlagzähmodifiziertes PMMA | | | | | | | |

## Patentansprüche

1.  Formkörper oder Folie aus Kunststoff mit einer Materialstärke von mindestens 150 $\mu$m, enthaltend eine Polymermischung enthaltend einen schlagzähmodifizierten Poly(meth)acrylat-Kunststoff aus einer Poly(meth)acrylat-Matrix und darin verteilten Elastomerteilchen, und ein Fluor-Polymer, wobei die Polymermischung aus dem schlagzähmodifizierten Poly(meth)acrylat-Kunststoff und dem Fluor-Polymeren in einer außen liegenden Schicht mit einer durchgängigen Materialstärke von mindestens 10 $\mu$m vorliegt,
    **dadurch gekennzeichnet, dass**
    der schlagzähmodizierte Poly(meth)acrylat-Kunststoff aus 60 bis 25 Gew.-% einer Poly(meth)acrylat-Matrix und 40 bis 75 Gew.-% Elastomerteilchen besteht und wobei der Anteil des Fluorpolymeren in der Mischung 40 bis 80 Gew.-% beträgt.

2.  Formkörper oder Folie nach Anspruch 1,
    **dadurch gekennzeichnet, dass**
    der Anteil des Fluorpolymeren in der Mischung zwischen 50 und 70 Gew.-% beträgt.

3. Formkörper oder Folie nach Anspruch 1 oder 2, **dadurch gekennzeichnet, dass** die Elastomerteilchen einen Kern mit einer weichen Elastomerphase und einer daran gebundenen Hartphase aufweisen.

4. Formkörper oder Folie nach Anspruch 1 bis 3, **dadurch gekennzeichnet, dass** der mittlere Teilchendurchmesser der Elastomerteilchen von 10 bis 1000 nm beträgt

5. Formkörper nach Anspruch 1 bis 4, **dadurch gekennzeichnet, dass** er <u>ganz</u> aus der Polymermischung aus dem schlagzähmodifizierten Poly(meth)acrylat-Kunststoff und dem Fluor-Polymeren besteht.

6. Formkörper oder Folie nach Anspruch 5, **dadurch gekennzeichnet, dass** die Materialstärke von 150 bis 10 000 $\mu$m beträgt.

7. Formkörper oder Folie nach Anspruch 6, **dadurch gekennzeichnet, dass** die Bruchdehnung nach 10-tägiger Lagerung bei 60° C mindestens 150 % beträgt.

8. Formkörper oder Folie nach Anspruch 6, **dadurch gekennzeichnet, dass** die Bruchdehnung nach 10-tägigen Lagerung bei 60° C noch mindestens 60 % des Wertes ohne 10-tägige thermische Belastung beträgt.

9. Formkörper oder Folie nach einem oder mehreren der Ansprüche 6 bis 8, **dadurch gekennzeichnet, dass** die Folie in einem Membranaufbau enthalten ist, wobei der Membranaufbau zumindest zwei gewölbte und an den Rändern miteinander verschweißte Folien enthält, die einen Hohlraum einschließen.

10. Verfahren zur Herstellung eines Formkörpers oder einer Folie nach einem oder mehreren der Ansprüche 6 bis 9 in an sich bekannter Weise mittels thermoplastischer Verarbeitung, insbesondere Extrusion oder Spritzguß, oder mittels Solvent-Casting.

11. Verwendung eines Formkörpers oder einer Folie nach einem oder mehreren der Ansprüche 6 bis 9 als Bedachungselement, Fassadenelement, als Fenster in einem Faltdach für ein Fahrzeug mit faltbarem Stoff- oder Kunststoffverdeck.

12. Formkörper nach Anspruch 1 bis 4, **dadurch gekennzeichnet, dass** es sich um einen <u>Verbundformkörper</u> handelt, der zusätzlich zur Schicht mit der Polymermischung aus dem schlagzähmodifizierten Poly(meth)acrylat-Kunststoff und dem Fluor-Polymeren einen weiteren, thermoplastisch verarbeitbaren, mit der Polymermischung verbundenen Kunststoff enthält und die Schicht aus der Polymermischung eine durchgängige Materialstärke von 10 bis 150 $\mu$m aufweist.

13. Verbundformkörper nach Anspruch 12, **dadurch gekennzeichnet, dass** der weitere Kunststoff ein Polymethylmethacrylat, schlagzäh modifiziertes Polymethylmethacrylat, Polycarbonat, Polystyrol, Acrylsäureester/Styrol/Acrylnitril-Pfropfcopolymer (ASA), Styrol-Acryl-Nitril (SAN), Polyethylentherephthalat (PET), glycolmodifiziertes Polyethylentherephthalat (PETG), Polybutylenterephthalat-Kunststoff (PBT), Polyvinylchlorid-Kunststoff (PVC), Polyolefin-Kunststoff, Cycloolefincopolymer (COC), Acrylnitfil-Butadien-Stryrol (ABS) oder eine Mischung (Blend) verschiedener thermoplastischer Kunststoffe ist.

14. Verbundformkörper nach Anspruch 12 oder 13, **dadurch gekennzeichnet, dass** er ein Verhältnis der Dehnung bei Beginn der Rissbildung in der Schicht der Polymermischung aus dem schlagzähmodifizierten Poly(meth)acrylat-Kunststoff und dem Fluor-Polymeren nach 10-tägiger Lagerung bei 60 °C geteilt durch den Wert ohne Wärmebehandlung von 0.5 aufweist.

15. Verfahren zur Herstellung eines Verbundformkörpers nach einem oder mehreren der Ansprüche 12 bis 14 in an sich bekannter Weise mittels Folienlamination, Coextrusion; Extrusionsbeschichten, Insert-Moulding-Verfahren oder Solvent-Cast-Verfahren.

16. Verwendung eines Verbundformkörpers nach einem oder mehreren der Ansprüche 12 bis 14 als Bedachungselement, Fassadenelement, Teile von Haushaltsgeräten, Kommunikationsgeräten, Hobby- oder Sportgeräten, Karosserieteile oder Teile von Karosserieteilen oder für Teile im Airtomobil-, Schiffs- oder Flugzeugbau wie z. B. Beplankungen, Stossfänger, Kotflügel, Blenden oder Zierleisten.

17. Formkörper oder Folie nach einem oder mehreren der Ansprüche 1 bis 16, **dadurch gekennzeichnet, dass** in der Schicht der Polymermischung aus dem schlagzähmodifizierten Poly(meth)acrylat-Kunststoff und dem Fluor-Polymeren 0,01 bis 10 Gew.-% eines Lichtschutzmittels enthalten sind.

**18.** Formkörper nach Anspruch 1 bis 4, **dadurch gekennzeichnet, dass** es sich um einen Verbundformkörper handele, der zusätzlich zur Schicht mit der Polymermischung aus dem schlagzähmodifizierten Poly(meth)acrylat-Kunststoff und dem Fluor-Polymeren eine mit der Polymermischung verbundene Hochdrucklaminatplatte, aus hochdruckverdichteten, kunstharzgetränktem Papier oder eine Metallplatte enthält, und die Schicht aus der Polymermischung eine durchgängige Materialstärke von 10 bis 150 μm aufweist.

**19.** Verfahren zur Herstellung eines Verbundformkörpers nach Anspruch 18 in an sich bekannter Weise mittels Hochdruck/Hochtemperatur-Pressprozess oder im Coil-Coating-Prozess.

**20.** Verwendung eines Verbundformkörpers nach Anspruch 18 als Bedachungselement, Fassadenelement, Teile von Haushaltsgeräten, Hobby- oder Sportgeräten, Karosserieteile oder Teile von Karosserieteilen oder für Teile im Automobil-, Schiffs- oder Flugzeugbau wie z. B. Beplankungen, Stossfänger, Kotflügel, Blenden oder Zierleisten.

**Claims**

**1.** Molding or film made of plastic and having a material thickness of at least 150 μm, comprising a polymer mixture comprising an impact-modified poly(meth)acrylate polymer composed of a poly(meth)acrylate matrix and elastomer particles distributed therein, and comprising a fluoropolymer, the polymer mixture composed of the impact-modified poly(meth)acrylate polymer and the fluoropolymer being present in an outer layer with a continuous material thickness of at least 10 μm,
**characterized in that**
the impact-modified poly(meth)acrylate polymer consists of from 60 to 25% by weight of a poly(meth)acrylate matrix and from 40 to 75% by weight of elastomer particles, and the proportion of the fluoropolymer in the mixture being from 40 to 80% by weight.

**2.** Molding or film according to Claim 1, **characterized in that** the proportion of the fluoropolymer in the mixture is between 50 and 70% by weight.

**3.** Molding or film according to Claim 1 or 2, **characterized in that** the elastomer particles have a core with a soft elastomer phase and a hard phase bonded thereto.

**4.** Molding or film according to Claim 1 to 3, **characterized in that** the mean particle diameter of the elastomer particles is from 10 to 1000 nm.

**5.** Molding or film according to Claim 1 to 4, **characterized in that** it consists entirely of the polymer mixture composed of the impact-modified poly(meth)acrylate polymer and the fluoropolymer.

**6.** Molding or film according to Claim 5, **characterized in that** the material thickness is from 150 to 10 000 μm.

**7.** Molding or film according to Claim 6, **characterized in that** the elongation at break after storage at 60°C for 10 days is at least 150%.

**8.** Molding or film according to Claim 6, **characterized in that** the elongation at break after storage at 60°C for 10 days is still at least 60% of the value without 10-day thermal stress.

**9.** Molding or film according to one or more of Claims 6 to 8, **characterized in that** the film is present within a membrane structure, the membrane structure comprising at least two curved films welded to one another at the edges and enclosing a cavity.

**10.** Process for producing a molding or a film according to one or more of Claims 6 to 9 in a manner known per se by means of thermoplastic processing, especially extrusion or injection molding, or by means of solvent casting.

**11.** Use of a molding or of a film according to one or more of Claims 6 to 9 as a roofing element, façade element, as a window in a folding roof for a vehicle with foldable soft top.

**12.** Molding according to Claim 1 to 4, **characterized in that** it is a <u>composite molding</u> which, in addition to the layer comprising the polymer mixture composed of the impact-modified poly(meth)acrylate polymer and the fluoropolymer, comprises a further thermoplastically processible polymer bonded to the polymer mixture and the layer of the polymer mixture has a continuous material thickness of from 10 to 150 um.

**13.** Composite molding according to Claim 12, **characterized in that** the further polymer is a polymethyl methacrylate, impact-modified polymethyl methacrylate, polycarbonate, polystyrene, acrylic ester/styrene/acrylonitrile graft copolymer (ASA), styrene-acrylonitrile (SAN), polyethylene terephthalate (PET), glycol-modified polyethylene terephthalate (PETG), polybutylene terephthalate (PBT), polyvinyl chloride (PVC), polyolefin, cycloolefin copolymer (COC), acrylonitrile-butadiene-styrene (ABS), or is a mixture (blend) of different thermoplastics.

**14.** Composite molding according to Claim 12 or 13, **characterized in that** it has a ratio of elongation at the start of crack formation in the layer of the polymer mixture composed of the impact-modified poly(meth)acrylate polymer and the fluoropolymer after storage at 60°C for 10 days divided by the value without heat treatment of 0.5.

**15.** Process for producing a composite molding according to one or more of Claims 12 to 14 in a manner known per se by means of film lamination, coextrusion, extrusion coating, insert molding processes or solvent casting processes.

**16.** Use of a composite molding according to one or more of Claims 12 to 14 as a roofing element, façade element, parts of household appliances, communication equipment, hobby or sport equipment, chassis parts or parts of chassis parts or for parts in automobile, ship or aircraft building, for example panels, bumpers, mud fenders, sun visors or trim.

**17.** Molding or film according to one or more of Claims 1 to 16, **characterized in that** from 0.01 to 10% by weight of a light stabilizer are present in the layer of the polymer mixture composed of the impact-modified poly(meth)acrylate polymer and the fluoropolymer.

**18.** Molding according to Claim 1 to 4, **characterized in that** it is a <u>composite molding</u> which, in addition to the layer comprising the polymer mixture composed of the impact-modified poly(meth)acrylate polymer and the fluoropolymer, comprises a high-pressure laminate plate bonded to the polymer mixture and composed of high-pressure-compacted, synthetic resin-impregnated paper or a metal plate, and the layer of the polymer mixture has a continuous material thickness of from 10 to 150 $\mu$m.

**19.** Process for producing a composite molding according to Claim 18 in a manner known per se by means of high-pressure/high-temperature pressing process or in the coil-coating process.

**20.** Use of a composite molding according to Claim 18 as a roofing element, façade element, parts of household appliances, hobby or sport equipment, chassis parts or parts of chassis parts or for parts in automobile, ship or aircraft building, for example panels, bumpers, mud fenders, sun visors or trim.

**Revendications**

**1.** Corps moulé ou film à base de matière plastique ayant une épaisseur de matériau d'au moins 150 $\mu$m, contenant un mélange de polymères contenant une matière plastique poly(méth)acrylate à modification antichoc, constituée d'une matrice de poly(méth)acrylate et de particules d'élastomère distribuées dans celle-ci, et un polymère fluoré, le mélange de polymères à base de la matière plastique poly(méth)acrylate à modification antichoc et du polymère fluoré se trouvant en une couche externe ayant une épaisseur constante de matériau d'au moins 10 $\mu$m, **caractérisé en ce que** la matière plastique poly(méth)acrylate à modification antichoc est constituée de 60 à 25 % en poids d'une matrice de poly(méth)acrylate et de 40 à 75 % en poids de particules d'élastomère et la proportion du polymère fluoré dans le mélange allant de 40 à 80 % en poids.

**2.** Corps moulé ou film selon la revendication 1, **caractérisé en ce que** la proportion du polymère fluoré dans le mélange est comprise entre 50 et 70 % en poids.

**3.** Corps moulé ou film selon la revendication 1 ou 2, **caractérisé en ce que** les particules d'élastomère présentent un noyau comportant une phase d'élastomère souple et une phase rigide liée à celle-ci.

**4.** Corps moulé ou film selon l'une quelconque des revendications 1 à 3, **caractérisé en ce que** le diamètre moyen de particule des particules d'élastomère va de 10 à 1 000 nm.

**5.** Corps moulé ou film selon l'une quelconque des revendications 1 à 4, **caractérisé en ce qu'**il consiste entièrement en le mélange de polymères à base de la matière plastique poly(méth)acrylate à modification antichoc et du polymère fluoré.

**6.** Corps moulé ou film selon la revendication 5, **caractérisé en ce que** l'épaisseur du matériau va de 150 à 10 000 $\mu$m.

**7.** Corps moulé ou film selon la revendication 6, **caractérisé en ce que** l'allongement à la rupture après stockage pendant 10 jours à 60 °C est d'au moins 150 %.

**8.** Corps moulé ou film selon la revendication 6, **caractérisé en ce que** l'allongement à la rupture après stockage pendant 10 jours à 60 °C représente encore au moins 60 % de la valeur sans sollicitation thermique pendant 10 jours.

**9.** Corps moulé ou film selon une ou plusieurs des revendications 6 à 8, **caractérisé en ce que** le film est contenu dans une structure de type membrane, la structure de type membrane contenant deux films bombés et soudés l'un à l'autre sur les bords, qui renferment une cavité.

**10.** Procédé pour la production d'un corps moulé ou d'un film selon une ou plusieurs des revendications 6 à 9, d'une façon connue en soi, par transformation thermoplastique, en particulier extrusion ou moulage par injection, ou par solvant-casting (coulée dans un solvant).

**11.** Utilisation d'un corps moulé ou d'un film selon une ou plusieurs des revendications 6 à 9, en tant qu'élément de couverture, élément de façade, en tant que fenêtre dans un toit pliant pour un véhicule à capote en tissu ou matière plastique repliable.

**12.** Corps moulé selon l'une quelconque des revendications 1 à 4, **caractérisé en ce qu'**il s'agit d'un corps moulé composite qui, outre la couche comportant le mélange de polymères à base de la matière plastique poly(méth) acrylate à modification antichoc et du polymère fluoré, contient une autre matière plastique apte à la transformation thermoplastique, liée au mélange de polymères et la couche constituée du mélange de polymères présente une épaisseur constante de matériau de 10 à 150 $\mu$m.

**13.** Corps moulé composite selon la revendication 12, **caractérisé en ce que** l'autre matière plastique est un poly (méthacrylate de méthyle), un poly(méthacrylate de méthyle) à modification antichoc, un polycarbonate, un polystyrène, un copolymère greffé ester d'acide acrylique/styrène/ acrylonitrile (ASA), un styrène-acrylonitrile (SAN), un poly(éthylène-téréphtalate) (PET), un poly(éthylène-téréphtalate) modifié par glycol (PETG), une matière plastique poly(butylène-téréphtalate) (PBT), une matière plastique poly(chlorure de vinyle) (PVC), une matière plastique polyoléfinique, un copolymère de cyclo-oléfine (COC), un acrylonitrile-butadiène-styrène (ABS) ou un mélange (alliage) de diverses matières synthétiques thermoplastiques.

**14.** Corps moulé composite selon la revendication 12 ou 13, **caractérisé en ce qu'**il présente un quotient de l'allongement au début du fendillement dans la couche du mélange de polymères à base de la matière plastique poly(méth) acrylate à modification antichoc et du polymère fluoré, après stockage pendant 10 jours à 60 °C, divisé par la valeur sans traitement thermique, de 0,5.

**15.** Procédé pour la production d'un corps moulé composite selon une ou plusieurs des revendications 12 à 14, d'une façon connue en soi, par stratification de films, coextrusion, enduction par extrusion, le procédé Insert-Moulding (surmoulage) ou le procédé Solvent-Cast (coulée dans un solvant).

**16.** Utilisation d'un corps moulé composite selon une ou plusieurs des revendications 12 à 14 en tant qu'élément de couverture, élément de façade, pièces d'appareils ménagers, d'appareils de communication, d'appareils de sport ou de loisir, pièces de carrosserie ou éléments de pièces de carrosserie ou pour des pièces dans la construction d'automobiles, de bateaux ou d'aéronefs, comme par exemple des bordés, des pare-chocs, des ailes, des garnitures ou des enjoliveurs.

**17.** Corps moulé ou film selon l'une quelconque des revendications 1 à 16, **caractérisé en ce que** de 0,01 à 10 % en poids d'un photoprotecteur sont contenus dans la couche du mélange de polymères à base de la matière plastique poly(méth)acrylate à modification antichoc et du polymère fluoré.

18. Corps moulé selon l'une quelconque des revendications 1 à 4, **caractérisé en ce qu'**il s'agit d'un corps moulé composite qui, outre la couche comportant le mélange de polymères à base de la matière plastique poly(méth) acrylate à modification antichoc et du polymère fluoré, comporte une plaque de stratifié haute pression, assemblée avec le mélange de polymères, à base de papier imprégné de résine synthétique, compressé sous haute pression, ou une plaque métallique, et la couche du mélange de polymères présente une épaisseur constante de matériau de 10 à 150 $\mu$m.

19. Procédé pour la production d'un corps moulé composite selon la revendication 18, d'une façon connue en soi, par un processus de pressage sous haute pression/haute température ou dans le processus Coil-Coating (d'enduction de ruban continu).

20. Utilisation d'un corps moulé composite selon la revendication 18 en tant qu'élément de couverture, élément de façade, pièces d'appareils ménagers, d'appareils de sport ou de loisir, pièces de carrosserie ou éléments de pièces de carrosserie ou pour des pièces dans la construction d'automobiles, de bateaux ou d'aéronefs, comme par exemple des bordés, des pare-chocs, des ailes, des garnitures ou des enjoliveurs.

## IN DER BESCHREIBUNG AUFGEFÜHRTE DOKUMENTE

### In der Beschreibung aufgeführte Patentdokumente

- EP 0476942 A
- JP OS03124754 A
- WO 0037237 A
- DE 10236045 A1
- EP 1093911 A2
- EP 0306385 A1
- JP 59127754 A
- JP 59127755 A
- EP 0113924 A
- EP 0522351 A
- EP 0465049 A
- EP 0683028 A
- EP 0528196 A1
- DE 3842796 A
- US 4513118 A
- US 4576870 A
- WO 9640480 A
- WO 8807416 A
- US 4902557 A

### In der Beschreibung aufgeführte Nicht-Patentliteratur

- **H. F. MARK et al.** Encyclopedia of Polymer Science and Engineering. J. Wiley, 1989, vol. 10, 1 ff
- *Kunststoffe,* 1984, vol. 74 (10), 620-623
- *Farbe + Lack,* 1990, vol. 9, 689-693
- Kunststoffextrusionstechnik II. Hanser Verlag, 1986, 125 ff
- Kunststoffextrusionstechnik II. Hanser Verlag, 1986, 320 ff